Europäisches Patentamt

European Patent Office

Office européen des brevets

(11) Publication number: **0 405 278 A2**

# EUROPEAN PATENT APPLICATION

(21) Application number: **90111440.5**

(22) Date of filing: **18.06.90**

(51) Int. Cl.⁵: **C09D 123/04, C09D 183/04**

(30) Priority: **19.06.89 JP 154702/89**

(43) Date of publication of application:
**02.01.91 Bulletin 91/01**

(84) Designated Contracting States:
**AT BE CH DE DK ES FR GB GR IT LI LU NL SE**

(71) Applicant: **NIPPON UNICAR COMPANY LIMITED**
**Asahi-Tokai Building 6-1 Ohtemachi**
**2-Chome**
**Chiyoda-ku Tokyo 100(JP)**

(72) Inventor: **Senuma, Akitaka**
**21-3 Saitobuncho**
**Kanagawa-Ku, Kanagawa-Ken(JP)**
Inventor: **Tsukada, Kiroku**
**1-17-2 -406 Saido, Kohnan-Ku**
**Yokohama Shi, Kanagawa-Ken(JP)**
Inventor: **Nagai, Toshiyuki**
**2-2-12, Kosono Minami**
**Ayase-Shi, Kanagawa-Ken(JP)**
Inventor: **Noda, Isao**
**2-9-11 Sakuragaoka**
**Yokosuka-Shi, Kanagawa-Ken(JP)**

(74) Representative: **von Hellfeld, Axel, Dipl.-Phys. Dr. et al**
**Wuesthoff & Wuesthoff Patent- und Rechtsanwälte Schweigerstrasse 2e 2**
**D-8000 München 90(DE)**

(54) A coating agent and coated material thereof.

(57) A coating agent comprising as a main component a reaction product obtained by heat-reacting a composition comprising
100 weight parts of ethylene polymer,
1 - 400 weight parts of organopolysiloxane having a viscosity higher than 1,000 CS at 23 °C and expressed by Formula (A)

$$R^1_a R^2_b SiO_{\frac{4-a-b}{2}} \qquad (A)$$

(where $R^1$ is an unsaturated aliphatic group, $R^2$ is an unsubstituted or a substituted monovalent hydrocarbon group containing no unsaturated aliphatic group, $0<a<1$, $0.5<b<3$, and $1<a+b<3$),
0.01 - 30 weight parts of a hydrocarbon compound expressed by Formula (B)
$CH_2 = CH(CH_2)_c CH = CH_2$ (B)
where c is an integer of 1 - 30), and

0.005 - 0.05 wight parts of an organic peroxide.

# A COATING AGENT AND COATED MATERIALS THEREOF

## BACKGROUND OF THE INVENTION

Field of Industrial Uses

This invention relates to a coating agent comprising as a main component a reaction product of an ethylene polymer, an organosilicon, and a diene hydrocarbon, and coated materials with the coating agent applied to the substrates.

Prior Art

The organopolysiloxane coating agent has been conventionally known. The heat resistance, weatherability, electric properties, oxygen permeability, flexibility, water repellency, etc. of the coated film of the agent are very good. But the strength, hardness, abrasion resistance, solvent resistance, etc. of the coated film, however, are inferior to those of the coated films of the other coating agents. These inferior properties have limited the applications of the organopolysiloxane coating agent.

## OBJECTIVES

In view of these problems, the inventors aim at providing a coating agent whose coated film has good strenth, hardness, abrasion resistance, solvent resistance, etc. without substantially impairing the chracteristics of the coated film of the organopolysiloxane coating agent, and coated materials with films of the agent applied to the substrates.

## SUMMARY

The coated material according to this invention, which has a coating applied to the substrate which comprises as a main component the specific copolymer including the ethylene polymer and the organopolysiloxan has good heat resistance, weatherability, electric properties, oxugen permeability, flexibility, water-repellency, mechanical properties. abrasion resistance, solvent resistance, etc. The coated material according to this invention can be used as oxygen permeating film, diaper covers, water-proof cloth, etc.

## DETAILED DESCRIPTION

The inventors filed a patent application in Japanese Patent Application No. 305185/1988 on a composition comprising an ethylene polymer, a vinyl group-content silicon compound, a diene-content hydrocarbon, and an organic peroxide. They have found that this composition is heat-kneaded to produce a reaction product which is moldable and has high strength, and the coated film of this reaction product which is applied to a substrate by solving the reaction product in an organic solvent, applying the solution to the substrate, drying the applied solution, and removing the solvent has higher strength than silicone resin, and, based on this practicabilty, they have completed this invention. That is, this invention relates to

1. a coating agent comprising as a main component a reaction product obtained by heat-reacting a composition comprising
100 weight parts of ethylene polymer,
1 - 400 weight parts of organopolysiloxane having a viscosity higher than 1,000 CS at 23 $^\circ$C and expressed by Formula (A)

$$R^1_a R^2_b SiO_{\frac{4-a-b}{2}} \qquad (A)$$

(where $R^1$ is an unsaturated aliphatic group, $R^2$ is an unsubstituted or a substituted monovalent hydrocarbon group containing no unsaturated aliphatic group, $0<a<1$, $0.5<b<3$, and $1(a+b<3)$,

0.01 - 30 weight parts of a hydrocarbon compound expressed by Formula (B)

$CH_2=CH(CH_2)_cCH=CH_2$    (B)

where c is an integer of 1 - 30), and

0.005 - 0.05 wight parts of an organic peroxide;

and

2. A coated material comprising the coating agent according to claim 1 applied to a substrate and dried.

The ethylene polymer used in the composition according to this invention contains ethylene as the main component and is exemplified by high-pressure process polyethylene, linear low-density polyethylene (LLDPE), ethylene-α-olefin copolymer, ethylene-vinyl acetate copolymer, ethylene-acrylic acid copolymer, ethylene-methacrylic acid copolymer, ethylene-methyl acrylate copolymer, ethylene-methyl methacrylate copolymer, ethylene-ethyl acrylate copolymer, ethylene-ethyl methacrylate, ethylene-vinyl alcohol copolymer, ethylene-propylene-diene terpolymer, etc. which have crystal melting points above 40α.

In Formula (A) expressing the organosilicon compound used in this invention, R represents one, or two or more than two groups of methyl group, ethyl group. n-propyl group, i-propyl group and other alkyl groups, or vinyl group, and at least more than 1 of R is vinyl group.

The organosilicon compound used in this invention may be those marketed as, e.g., modifiers for the tear strength of silicone rubber.

The viscosity of the organosilicone compound expressed by Formula (A) used in this invention at 23 °C is equal to or higher than 1,000 CS, preferably 10,000 - 1,000,000 CS. When the viscosity is lower than 1,000 CS, the composition is difficult to be heat-kneaded, and often the organosilicon compound exudes from surfaces of the resultant moldings.

The hydrocarbon compound expressed by Formula (B) used in this invention is exemplified by 1,4-pentadiene, 1,5 hexadiene, 1,6-heptadiene, 1,7-octadiene, 1,8-nonadiene, 1,9-decadiene, 1,10-undecadiene, 1,11-dodecadiene, 1,12-tridecadiene, 1, 13-tetradecadiene, 1, 14-pentadecadiene, 1,15-hexadecadiene, 1,16-heptadecadiene, 1,17-octadecadiene, 1,18-nonadecadiene, etc.

The organic peroxide used in this invention has a decomposition temperature of 100 - 220 °C in a half life of 10 minutes and is exemplified by the following. Their decomposition temperatures (°C) are shown in parentheses.

Succinic acid peroxide (110), benzoyl peroxide (110), t-butyl peroxy-2-ethyl hexanoate (113), p-chlorobenzoyl peroxide (115), t-butyl peroxy isobutylate (115), t-butyl peroxyisopropyl carbonate (135), t-butyl perooxylaurate (140), 2,5-dimethyl-2,5-di(benzoylperoxy)hexane (140), t-butyl peroxyacetate (140), di-t-butyl diperoxyphthalate (140), t-butyl peroxymaleic acid (140), cyclohexanon peroxide (145), t-butyl peroxybenzoate (145), dicumyl peroxide (150), 2,5-dimethyl-2,5-di(t-butyl peroxy)hexane (155), t-butyl cumylperoxide (155), t-butyl hydroperoxide (158),di-t-butyl peroxide (160), 2,5-dimethyl-2,5-di(t-butyl peroxy)hexine-3 (170), di-isopropyl benzene hydroperoxide (170), p-menthane hydroperoxide (180), 2,5-dimethyl hexane-2,5-dihydroperoxide (213)

It is preferable that the organic solvent used in this invention solves the reaction product comprising the ethylene polymer, the organosilicon, and the hydrocarbon. But the reaction product often contains tens % of gels insoluble in organic solvents, which causes no problems.

The organic solvent used in this invention is exemplified by benzene, toluene, xylene, chloroform, carbon tetrachloride, gasoline, etc. For the purpose of improving the efficiency of the coating operation or controlling the thickness of the films to be coated, methyl ethyl ketone, acetone, dimethyl formaldehyde, N-methyl-2-pyridone, cellosolve, etc. may be added.

The substrate used in this invention is woven fabric, unwoven fabric, fiber, paper, corrugated board, wood planks, plywoods, iron plates, aluminium plates, stainless plates, copper plates, zinc plates, plastic plates, laminated plates having glass cloth, mica flakes as bases, stone planks, meshes, hollow paper, foamed plastic breathable sheets, etc. For improving the adhesion, a primer may be applied beforehand to the surfaces of a substrates. The primer is exemplified by γ-aminopropyl trimethoxysilane, γ-glycidoxy propylsilane, vinyl triethoxysilane, etc.

The coating agent is applied by known methods, e.g., the spray coating, roller coating, brush coating, etc.

The organosilicon compound expressed by Formula (A) used in this invention is added by 1 part or more, preferably 2 - 400 parts to 100 weight parts of the ethylene polymer. When the compound is added by less than 1 part exclusive of 1 part, the characteristics of silicone are not exhibited easily. When the compound is added by more than 400 parts, the strength of the reaction product lowers.

The hydrocarbon compound expressed by Formula (B) used in this invention is added by 0.1 or more parts, preferably 0.05 - 30 parts. When the compound is added by less than 0.01 parts exclusive of 0.01 parts, the resultant molding often has masses of crosslinked silicone, and the reaction product lacks homogeneity.

The organic peroxide used in this invention is added by 0.005 - 0.05 parts to 100 weight parts of the ethylene polymer. When the organic peroxide is added by less than

The substrate used in this invention is woven fabric, unwoven fabric, fiber, paper, corrugated board, wood planks, plywoods, iron plates, aluminium plates, stainless plates, copper plates, zinc plates, plastic plates, laminated plates having glass cloth, mica flakes as bases, stone planks, wire-nettings, hollow paper, foamed plastic breathable sheets, etc. For improving the adhesion, a primer may be applied beforehand to the surfaces of a substrates. The primer is exemplified by $\gamma$-aminopropyl trimethoxysilane, $\gamma$-glycidoxy propylsilane, vinyl triethoxysilane, etc.

The coating agent is applied by known methods, e.g., the spray coating, roller coating, brush coating, etc.

The organosilicon compound expressed by Formula (A) used in this invention is added by 1 part or more, preferably 2 - 400 parts to 100 weight parts of the ethylene polymer. When the compound is added by less than 1 part exclusive of 1 part, the characteristics of silicone are not exhibited easily. When the compound is added by more than 400 parts, the strength of the reaction product lowers.

The hydrocarbon compound expressed by Formula (B) used in this invention is added by 0.1 or more parts, preferably 0.05 - 30 parts. When the compound is added by less than 0.01 parts exclusive of 0.01 parts, the resultant molding often has masses of crosslinked silicone, and the reaction product lacks homogeneity.

The organic peroxide used in this invention is added by 0.005 - 0.05 parts to 100 weight parts of the ethylene polymer. When the organic peroxide is added by less than 0.005, the reaction time often becomes longer. When the compound is added by more than 0.05 parts, the agent is difficult to be solved in the organic solvent.

The amount of the organic solvent used in this invention is preferably 1 - 1,000 weight parts to 1 weight part of the reaction product.

It is possible to heat the system when the reaction product is solved in the organic solvent.

In this invention, the composition is reacted suitably by heat-kneading by kneaders, extuders, etc. The reaction temperature is 100 - 220 °C. The reaction period of time is about tens minutes.

EXAMPLES

Example 1

One hundred (100) weight parts of ethylene-vinyl acetate copolymer (made by Nippon Unicar) having a melt index of 15 g/10 mins. (190 °C, 2160 g) and 18 wt% of vinyl acetate content, 100 weight parts of silicone gum stock (made by Nippon Unicar) having a viscosity of 300,000 CS at 23 °C and a 1.0 % of methyl vinylsilicone, 1 part of 1,13-tetradecadiene, 0.05 parts of dicumyl peroxide, 0.05 parts of IRGANOX 1010 (an antioxidant made by Ciba Gaigy) were kneaded at 100 °C for 10 minutes and at 170 °C for 20 minutes. The kneaded result had a melt index of 0.1 g/10 mins., a tensile strength of 60 kg/cm$^2$, an elongation of 500 %, and a hardness of 45 (Shore A). Twenty five (25) parts of chloroform was added to 1 part of the pelletized kneaded result, heated for 60 minutes and cooled to obtain a solution. This solution contained the gel by 70 parts.

A wire-netting of 400 mesh was dipped in this solution and lifted to be air-dried. The coating was mesured by Parking Elmer 1750 FTIR. The reaction product was coated on the wire netting in a thickness of 1.5 . Table 1 shows the result of measured gas permeability of the coated film.

Apparent Oxugen Permeability Coefficient:
$50 \times 10^{10}$ cm$^3$(STP) cm cm$^{-2}$ s$^{-1}$ cmHg$^{-1}$

Apparent Nitrogen Permeability Coefficient:

5

$18 \times 10^{10} cm^3 (STP) \, cm \, cm^{-2} \, s^{-1} \, cmHg^{-1}$

Example 2

One hundred (100) weight parts of ethylene-ethyl acrylate copolymer (made by Nippon Unicar) having a melt index (190 °C, 2160 g) and an ethyl acrylate content of 35 wt%, 100 parts of silicone gum stock (made by Nippon Unicar) having a viscosity of 300,000 CS at 23 °C and a methyl vinylsilicone content of 1.0 %, 0.5 parts of 1,13-tetradecadiene, 0.05 parts of dicumyl peroxide, and 0.05 parts of IRGANOX 1010 (an antioxidant made by Ciba Gaigy) were kneaded by a Brabender Plastograph at 120 °C for 10 minutes and at 180 °C for 15 minutes. The kneaded result had a melt index of 0.08 g/10 mins.. 300 parts of toluene were added to 1 part of the pelletized kneaded result, heated at 100 °C for 60 minutes, and cooled to obtain a solution. This solution contained the gel by 70 parts.

This solution was applied to a cotton cloth and air-dried. The result had water-repellency which lasted even after a half year of outdoor exposure.

**Claims**

1. A coating agent comprising as a main component a reaction product obtained by heat-reacting a composition comprising
100 weight parts of ethylene polymer,
1 - 400 weight parts of organopolysiloxane having a viscosity higher than 1,000 CS at 23 °C and expressed by Formula (A)

$$R^1_a R^2_b SiO_{\frac{4-a-b}{2}} \qquad (A)$$

(where $R^1$ is an unsaturated aliphatic group, $R^2$ is an unsubstituted or a substituted monovalent hydrocarbon group containing no unsaturated aliphatic group, $0 < a < 1$, $0.5 < b < 3$, and $1 < a + b < 3$),
0.01 - 30 weight parts of a hydrocarbon compound expressed by Formula (B)
$CH_2 = CH(CH_2)_c CH = CH_2$ (B)
where c is an integer of 1 - 30), and
0.005 - 0.05 wight parts of an organic peroxide.
2. A coated material comprising the coating agent according to claim 1 applied to a substrate and dried.